# EUROPÄISCHE PATENTANMELDUNG

(11) **EP 1 394 434 A1**
(43) Veröffentlichungstag der Anmeldung: **03.03.2004**
(21) Anmeldenummer: 03018599.5
(22) Anmeldetag: 19.08.2003
(51) Int. Cl.: F16D 21/06, F16D 13/71

(54) **Doppelkupplung**

(30) Priorität: 28.08.2002 DE 10239404
(71) Anmelder: ZF Sachs AG, 97424 Schweinfurt (DE)
(72) Erfinder: Orlamünder, Andreas, Dipl.-Ing., 97422 Schweinfurt (DE); Vogt, Sebastian, Dipl.-Ing., 97616 Bad Neustadt (DE)

(57) **Zusammenfassung**

Eine Doppelkupplung umfasst zwei Kupplungsbereiche (12, 14) jeweils mit einer vermittels einer Kraftbeaufschlagungsanordnung (20, 22) auf eine Widerlageranordnung (26) zu beaufschlagbaren Anpressplatte (16, 18), wobei die Widerlageranordnung (26) über eine Verbindungsplattenanordnung (44) an ein Antriebsorgan (54) anzukoppeln ist, ferner umfassend einen mit der Widerlageranordnung (26) zur gemeinsamen Drehung gekoppelten Anlasserzahnkranz (36), wobei der Anlasserzahnkranz (36) einen ersten Kopplungsbereich (40) zur Verbindung mit der Widerlageranordnung (26) aufweist und einen zweiten Kopplungsbereich (42) zur Verbindung mit der Verbindungsplattenanordnung (44) aufweist.

## Beschreibung

Die vorliegende Erfindung betrifft eine Doppelkupplung, umfassend zwei Kupplungsbereiche jeweils mit einer vermittels einer Kraftbeaufschlagungsanordnung auf eine Widerlageranordnung zu beaufschlagbaren Anpressplatte, wobei die Widerlageranordnung über eine Verbindungsplattenanordnung an ein Antriebsorgan anzukoppeln ist, ferner umfassend einen mit der Widerlageranordnung zur gemeinsamen Drehung gekoppelten Anlasserzahnkranz.

Bei derartigen Kupplungen ist es bekannt, den Anlasserzahnkranz durch Verschweißung an die Widerlagerplattenanordnung anzubinden. Dieser Vorgang der Verbindung führt zu dem Problem, dass einerseits durch das Einführen einer Schweißverbindung, über welche auch das Anlassdrehmoment übertragen werden muss, in die reibmäßig wirksam werdende Widerlageranordnung ein erheblicher Anteil an Wärmeenergie eingeleitet wird, was zu lokalen Verformungen derselben führen kann. Auch erfordert diese Art der Verbindung komplex aufgebaute Bauteile und führt im Drehbetrieb zu durch Fliehkraft induzierten Problemen.

Es ist die Aufgabe der vorliegenden Erfindung, eine Doppelkupplung vorzusehen, bei welcher im Bereich der Einbindung des Zahnkranzes eine verbesserte Funktionalität erreicht wird.

Gemäß einem ersten Aspekt der vorliegenden Erfindung wird diese Aufgabe gelöst durch eine Doppelkupplung, umfassend zwei Kupplungsbereiche jeweils mit einer vermittels einer Kraftbeaufschlagungsanordnung auf eine Widerlageranordnung zu beaufschlagbaren Anpressplatte, wobei die Widerlageranordnung über eine Verbindungsplattenanordnung an ein Antriebsorgan anzukoppeln ist, ferner umfassend einen mit der Widerlageranordnung zur gemeinsamen Drehung gekoppelten Anlasserzahnkranz, wobei der Anlasserzahnkranz einen ersten Kopplungsbereich zur Verbindung mit der Widerlageranordnung aufweist und einen zweiten Kopplungsbereich zur Verbindung mit der Verbindungsplattenanordnung aufweist.

Der Anlasserzahnkranz übernimmt bei dieser Ausgestaltungsform gleichzeitig auch die Funktion eines Verbindungsglieds, über welches die Anbindung an eine Antriebswelle oder dergleichen erfolgen kann.

Dabei kann beispielsweise vorgesehen sein, dass der Anlasserzahnkranz die Widerlageranordnung mit seinem ersten Kopplungsbereich umgebend angeordnet ist und mit dieser durch Presssitz oder/und Verschweißung verbunden ist.

Um die Anbindung der Doppelkupplung an eine Antriebswelle noch weiter zu erleichtern, wird vorgeschlagen, dass der Anlasserzahnkranz axial versetzt zu seiner Verzahnung den zweiten Kopplungsbereich aufweist.

Gemäß einem weiteren Aspekt wird die eingangs genannte Aufgabe gelöst durch eine Doppelkupplung, umfassend zwei Kupplungsbereiche jeweils mit einer vermittels einer Kraftbeaufschlagungsanordnung auf eine Widerlageranordnung zu beaufschlagbaren Anpressplatte, wobei die Widerlageranordnung über eine Verbindungsplattenanordnung an ein Antriebsorgan anzukoppeln ist, ferner umfassend einen mit der Widerlageranordnung zur gemeinsamen Drehung gekoppelten Anlasserzahnkranz, wobei die Verbindungsplattenanordnung mit der Widerlageranordnung fest verbunden ist und der Anlasserzahnkranz an der Verbindungsplattenanordnung getragen ist.

Bei dieser Ausgestaltungsform ist eine direkte körperliche Berührung zwischen Anlasserzahnkranz und Widerlageranordnung nicht vorhanden, so dass durch die Anbindung des Zahnkranzes an die Widerlageranordnung induzierte Probleme weitgehend vermieden werden können.

Beispielsweise kann vorgesehen sein, dass die Widerlageranordnung mit der Verbindungsplattenanordnung durch Verschraubung fest verbunden ist. Alternativ ist es möglich, dass die Verbindungsplattenanordnung mit der Widerlageranordnung durch Presssitz oder/und Verschweißung fest verbunden ist.

Die Verbindungsplattenanordnung kann einen Verbindungsring aufweisen, der mit der Widerlageranordnung fest verbunden ist, und der Anlasserzahnkranz kann an dem Verbindungsring getragen sein.

Um in einfacher Art und Weise eine feste Verbindung zwischen dem Verbindungsring und der Widerlageranordnung erhalten zu können, wird vorgeschlagen, dass der Verbindungsring die Widerlageranordnung umgebend angeordnet ist und mit dieser durch Presssitz verbunden ist. Dabei ist es dann weiter möglich, dass der Anlasserzahnkranz den Verbindungsring umgebend angeordnet ist und mit diesem durch Presssitz verbunden ist.

Gemäß einem weiteren Aspekt der vorliegenden Erfindung betrifft diese eine Doppelkupplung, umfassend zwei Kupplungsbereiche jeweils mit einer vermittels einer Kraftbeaufschlagungsanordnung auf eine Widerlageranordnung zu beaufschlagbaren Anpressplatte, wobei die Widerlageranordnung über eine Verbindungsplattenanordnung an ein Antriebsorgan anzukoppeln ist, ferner umfassend einen mit der Widerlageranordnung zur gemeinsamen Drehung gekoppelten Anlasserzahnkranz, wobei an der Widerlageranordnung eine Axialanschlagformation zur Axiallagevorgabe für den Anlasserzahnkranz vorgesehen ist.

Durch das Bereitstellen einer Axialanschlagformation kann exakt die Lage des Anlasserzahnkranzes vorgegeben werden.

Hierzu ist es beispielsweise möglich, dass die Widerlageranordnung eine Mehrzahl von Kopplungsvorsprüngen zur Verbindung mit der Verbindunsplattenanordnung aufweist und dass die Axialanschlagformation im Bereich von Kopplungsvorsprüngen vorgesehen ist. In diesem Fall kann vorgesehen sein, dass die Axialanschlagformation wenigstens einen in die Widerlageranordnung eingesetzten Anschlagstift umfasst.

Außerdem kann in einer alternativen Variante der Axialanschlag in einer nicht dargestellten Montagevorrichtung vorhanden sein.

Die vorliegende Erfindung wird nachfolgend mit Bezug auf die beiliegenden Zeichnungen anhand bevorzugter Ausgestaltungsformen beschrieben. Es zeigt:
- Fig. 1: eine Teil-Längsschnittansicht einer Doppelkupplung;
- Fig. 2: eine der Fig. 1 entsprechende Ansicht einer alternativ ausgestalteten Doppelkupplung;
- Fig. 3: eine der Fig. 1 entsprechende Ansicht einer alternativ ausgestalteten Doppelkupplung;
- Fig. 4: eine der Fig. 1 entsprechende Ansicht einer alternativ ausgestalteten Doppelkupplung.

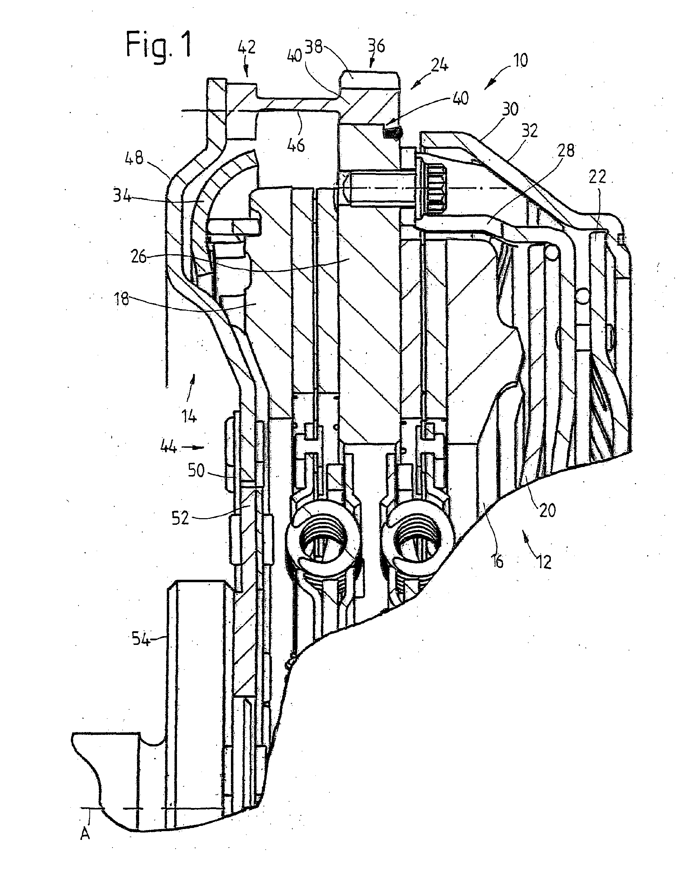

In Fig. 1 ist eine gemäß den Prinzipien der vorliegenden Erfindung aufgebaute Doppelkupplung 10 gezeigt. Diese umfasst grundsätzlich zwei Kupplungsbereiche 12, 14 jeweils mit einer Anpressplatte 16, 18, die unter der Enwirkung einer jeweiligen Kraftbeaufschlagungsanordnung 20 bzw. 22 in Richtung auf eine Widerlageranordnung 24 zu beaufschlagbar sind. Die Widerlageranordnung 24 umfasst im dargestellten Beispiel eine Zwischenplatte 26, so dass zur Erlangung jeweiliger Einrückzustände die beiden Anpressplatten 16, 18 in entgegengesetzter axialer Richtung auf die Zwischenplatte 26 zu bewegt werden. Es ist selbstverständlich, dass bei entsprechender Ausgestaltung der Widerlageranordnung 24 mit zwei Plattenteilen die beiden Anpressplatten 16, 18 zur Erlangung von Einrückzuständen auch jeweils auf ein zugeordnetes Plattenteil zu und dann in der gleichen axialen Richtung bewegt werden können. Die Kraftbeaufschlagungsanordnung 20 des Kupplungsbereichs 12, welche beispielsweise mehrere eine Einrückkraft übertragende Hebelelemente, ggf. aber auch einen membranfederartig ausgebildeten Kraftspeicher umfassen kann, ist zur Reaktionskraftabstützung an einem Gehäuse 28 gelagert, das mit der Zwischenplatte 26 fest verbunden ist. Die Kraftbeaufschlagungsanordnung 22 des Kupplungsbereichs 14 beaufschlagt die zugeordnete Anpressplatte 18 über eine Kraftübertragungsanordnung 30 und ist dabei ebenfalls am Gehäuse 28 gelagert. Die Kraftübertragungsanordnung 30 kann zwei topfoder tellerartig ausgestaltete Kraftübertragungselemente 32, 34 umfassen, die die Zwischenplatte 26 überbrückend miteinander gekoppelt sind.

Ein Anlasserzahnkranz 36 ist bei der in Fig. 1 dargestellten Ausgestaltungsform so ausgebildet, dass er mit demjenigen ringartigen Bereich, in welchem auch die Verzahnung 38 desselben ausgebildet ist, die Widerlageranordnung 24 bzw. im dargestellten Beispiel die Zentralplatte 26 radial außen umgibt. Zur Vorgabe einer bestimmten Axialpositionierung können jeweilige Radialschultern der Zwischenplatte 26 und des Anlasserzahnkranzes 36 bei 40 zur Anlage aneinander kommen. Die feste Verbindung des Anlasserzahnkranzes 36 mit der Zwischenplatte 40 kann durch Verschweißung, beispielsweise Laserschweißen, erfolgen. Grundsätzlich ist aber auch eine Verbindung durch Presspasssitz möglich, der entweder durch entsprechendes Aufpressen des Anlasserzahnkranzes 36 oder durch Aufschrumpfen erzeugt werden kann. Auch in diesem Fall kann zusätzlich zumindest an einigen Umfangspositionen eine weitere Verbindung durch Verschweißung vorgesehen sein. Der Anlasserzahnkranz 36, der also in einem ersten Kopplungsbereich 40 desselben an die Zwischenplatte 26 angekoppelt ist, weist axial versetzt zu seinem die Verzahnung 38 aufweisenden Bereich einen zweiten Kopplungsbereich 42 auf, in welchem eine allgemein mit 44 bezeichnete Verbindungsplattenanordnung mit dem Anlasserzahnkranz 36 gekoppelt ist. Der beispielsweise ebenfalls ringartig ausgebildete zweite Kopplungsbereich 42 kann mit dem ersten Kopplungsbereich 40 durch einen Verbindungsstegbereich 46 verbunden sein und kann mehrere Innengewindeöffnungen aufweisen, in welche dann die ein Plattenteil 48 der Verbindungsplattenanordnung 44 an den Anlasserzahnkranz 36 anbindenden Schraubbolzen oder dergleichen eingesetzt werden. Das Plattenteil 48 ist über eine federartige Formation 50 an ein weiteres Plattenteil 52 angebunden, das wiederum an eine Antriebswelle 54, beispielsweise eine Kurbelwelle einer Brennkraftmaschine, durch Verschraubung oder dergleichen fest verbunden werden kann. Durch die vermittels der Formation 50 eingeführte Elastizität ist eine Taumelentkopplung zwischen der Antriebswelle 54 und der Doppelkupplung 10 vorgesehen.

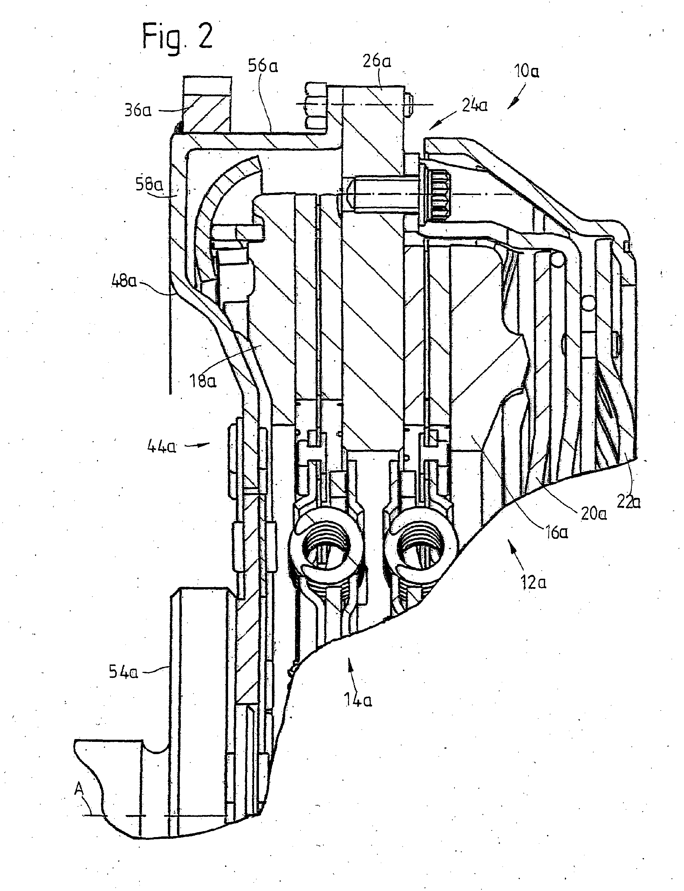

In Fig. 2 ist eine alternative Ausgestaltungsform einer erfindungsgemäßen Doppelkupplung gezeigt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet. Der Aufbau der Doppelkupplung 10a an sich entspricht dem vorangehend Beschriebenen, so dass hierauf nicht weiter eingegangen wird.

Das Plattenteil 48a der Verbindungsplattenanordnung 44a weist in seinem radial äußeren Bereich einen Verbindungsring 56a auf, also einen ringartigen und sich näherungsweise axial erstreckenden Bereich. In seinem axialen Ende ist dieser Verbindungsring 56a zumindest bereichsweise nach radial außen abgekröpft, um dort eine Schraubanbindung an die Zwischenplatte 26a herstellen zu können. Der Anlasserzahnkranz 36a ist im dargestellten Beispiel an dem Verbindungsring 56a getragen, vorzugsweise in einem Übergangsbereich an einen sich näherungsweise radial erstreckenden Abschnitt 58 des Plattenteils 48a, so dass eine hohe Stabilität erreicht werden kann. Die Anbindung des Anlasserzahnkranzes 36a kann durch Verschweißung, kann aber auch durch Presssitz erfolgen.

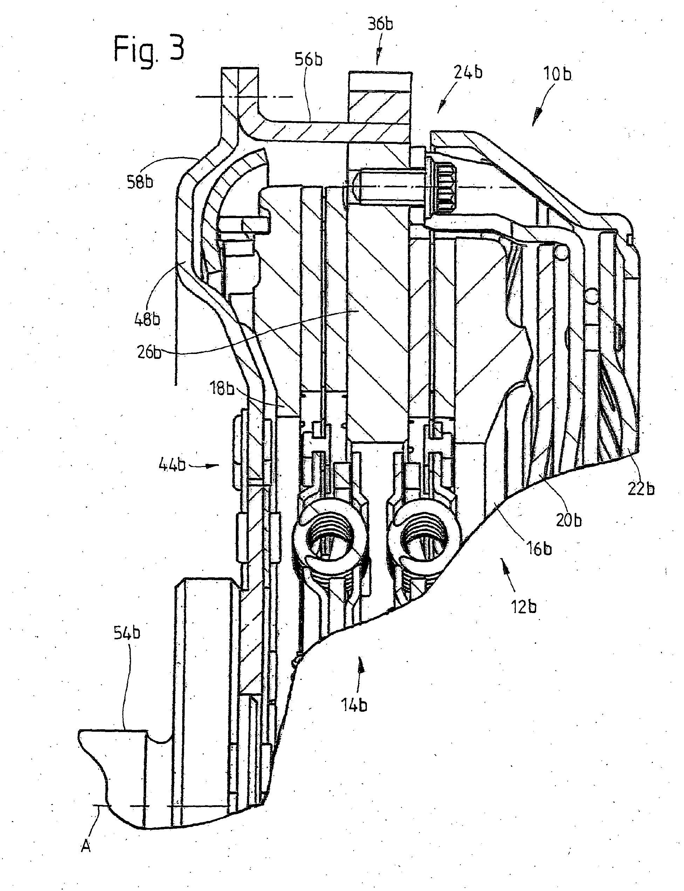

Eine weitere erfindungsgemäße Ausgestaltungsform einer Doppelkupplung ist in Fig. 3 gezeigt. Auch hier entspricht der grundsätzliche Aufbau dem mit Bezug auf die Fig. 1 Beschriebenen, so dass auf die vorangehenden Ausführungen verwiesen wird. Komponenten, die vorangehenden Komponenten hinsichtlich Aufbau bzw. Funktion entsprechen, sind mit dem gleichen Bezugszeichen unter Hinzufügung eines Anhangs "b" bezeichnet. Man erkennt hier, dass der Verbindungsring 56b als vom Plattenteil 48b gesondertes Bauteil ausgebildet ist und mit diesem in seinem sich näherungsweise radial erstreckenden Bereich 58b beispielsweise durch Verschraubung, Vernietung oder dergleichen fest verbunden werden kann. Der Verbindungsring 56b ist in seinem axial freien Endbereich die Zwischenplatte 26b umgebend angeordnet und mit dieser beispielsweise durch Presssitz verbunden. Auch hier kann der Presssitz durch entsprechendes axiales Aufschieben, durch Aufschrumpfen oder dergleichen erfolgen. Der Anlasserzahnkranz 36b ist den Verbindungsring 56 radial außen umgebend angeordnet, und zwar in demjenigen axialen Bereich desselben, in dem dieser die Zwischenplatte 26b radial außen umgibt. Auch der Anlasserzahnkranz 36b ist dem Verbindungsring 56b vorzugsweise durch Presssitz fest verbunden. Sowohl im Bereich der Kopplung zwischen Verbindungsring 56b und Zwischenplatte 26b als auch im Bereich der Kopplung zwischen Verbindungsring 56b und Anlasserzahnkranz 36b kann zusätzlich an zumindest einigen Bereichen durch Verschweißung eine erhöhte Festigkeit erlangt werden.

Es ist selbstverständlich, dass auch bei dieser Ausgestaltungsform der Verbindungsring 56b integral mit dem Plattenteil 48b der Verbindungsplattenanordnung 44b ausgebildet sein kann. Ferner kann bei allen dargestellten Ausgestaltungsformen im Bereich der Verbindung des Anlasserzahnkranzes beispielsweise mit der Verbindungsplattenanordnung oder der Zwischenplatte und ebenso im Bereich der Verbindung der Verbindungsplattenanordnung mit der Zwischenplatte und ebenso im Bereich der Verbindung der Verbindungsplattenanordnung mit der Zwischenplatte eine in Umfangsrichtung formschlüssig wirkende Kopplung vorgesehen sein, beispielsweise durch Bereitstellung entsprechender Vorsprungs- bzw. Ausnehmungsbereiche, die zusätzlich zu dem angesprochenen Presssitz oder der Schweißverbindung für eine erhöhte Kopplungsstabilität sorgt.

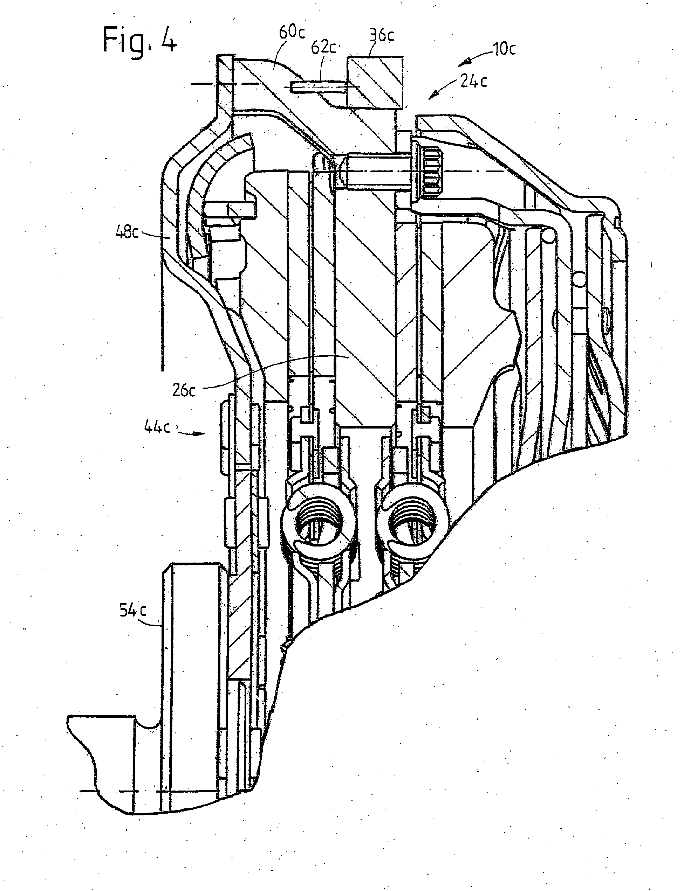

Eine weitere Ausgestaltung einer erfindungsgemäßen Doppelkupplung ist in Fig. 4 gezeigt. Komponenten, welche vorangehend beschriebenen Komponenten entsprechen, sind mit dem gleichen Bezugszeichen unter Hinzufügung eines Anhangs "c" bezeichnet. Bei der in Fig. 4 gezeigten Doppelkupplung 10c weist die Zwischenplatte 26c in ihrem radial äußeren Bereich eine Mehrzahl von sich in Achsrichtung erstreckenden Kopplungsvorsprüngen 60c auf. Im Bereich der freien Enden dieser Kopplungsvorsprünge 60c kann das Plattenteil 48c der Verbindungsplattenanordnung 44c durch Schraubbolzen oder dergleichen an die Doppelkupplung 10c angebunden werden. Der Anlasserzahnkranz 36c ist die Zwischenplatte 26c radial außen umgebend angeordnet und an dieser beispielsweise durch Presssitz oder Verschweißung oder/und Formschluss gehalten. In zumindest einige der Kopplungsvorsprünge 60c sind mehrere sich näherungsweise axial erstreckende Anschlagstifte 62c eingesetzt, an welchen beim axialen Aufschieben auf die Zwischenplatte 26c der Anlasserzahnkranz 36c zur Anlage kommt. Die Stifte 62c bilden somit eine Anschlagformation für den Anlasserzahnkranz 36c, welche dessen Axialpositionierung bezüglich der Zwischenplatte 26c vorgibt. Es ist somit nicht erforderlich, irgendwelche Einkerbungen oder dergleichen am äußeren Umfangsbereich der Zwischenplatte 26c zur entsprechenden Positionierung des Anlasserzahnkranzes vorzusehen. Selbstverständlich ist es auch möglich, diese Stifte 62c bzw. entsprechende Vorsprünge bzw. Anschlagflächen als integralen Bestandteil der Kopplungsvorsprünge 60c bereitzustellen.

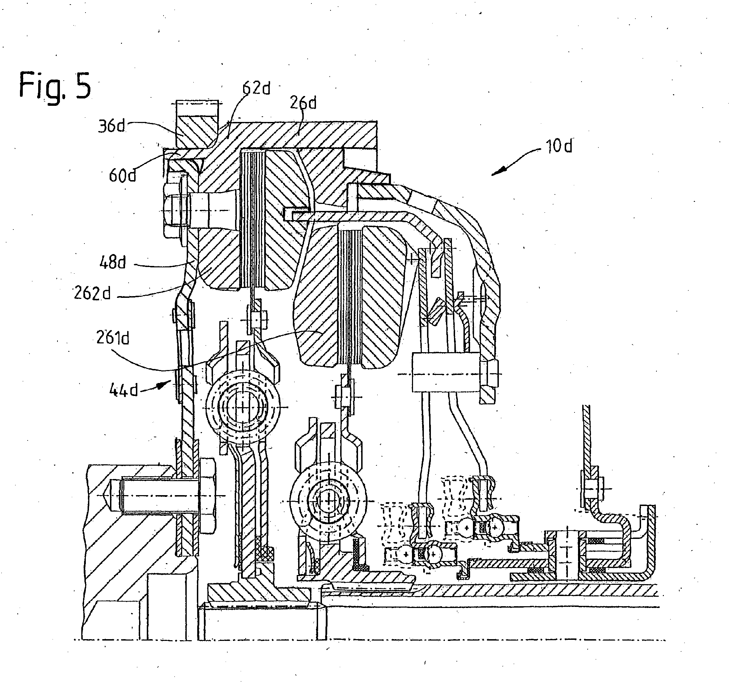

Eine weitere Ausgestaltung einer erfindungsgemäßen Doppelkupplung ist in Fig. 5 gezeigt. Komponenten, welche vorangehend beschriebenen Komponenten entsprechen, sind mit dem gleichen Bezugszeichen unter Hinzufügung eines Anhangs "d" bezeichnet. Bei der in Fig. 5 gezeigten Doppelkupplung 10d weist die Zwischenplatte 26d in ihrem radial äußeren Bereich eine Mehrzahl von sich in Achsrichtung erstreckenden Kopplungsvorsprüngen 60d auf. Diese Koppelungsvorsprünge 60d dienen bei dieser Ausführungsvariante zur Achsparallelen positionierung der der Verbindungsplattenanordnung 44d zur Doppelkupplung 10d. Alternativ können die Koppelungsvorsprünge 60d auch als in Umfangsrichtung durchgehender Bundes ausgebildet sein. Weiterhin ist hier offenbart, dass die Zwischenplatte 26d sich alternativ zusammensetzt aus zwei einzelnen Zwischenplatten 261d und 262d, welchen jeweils eine der Anpressplatten zugeordnet ist. Hier ist eine der Anpressplatten zwischen den Zwischenplatten 261d und 262d axial beweglich angeordnet. Wie in Figur 4 wird der Anlasserzahnkranz 36d über die Anschlagformation 62d in Axialrichtung positioniert, wobei auch in Figur 5 die Stifte 62c der Figur 4 alternativ einsetzbar sind. Durch die radial übereinander angeordnete Ausrichtung des Koppelungsvorsprunges 60d und des Anlasserzahnkranzes 36d können beide Teile schwächer ausgeführt werden, da diese sich gegenseitig versteifen.. Weiterhin sei angemerkt, dass die zweiteilige Ausführung der Zwischenplatte 26d als Zwischenplatten 261d und 262d auch bei den vorab in Figuren 1 bis 4 gezeigten Doppelkupplungen alternativ möglich ist. Die Zwischenplatte 26 ist demnach bei keiner hier offenbarten Ausführungsform als Beschränkung auf eine einzige Zwischenplatte, zwischen zwei Anpressplatten angeordnet, anzusehen.

Ein Vorteil der vorangehend beschriebenen Ausgestaltungformen ist, dass im Wesentlichen nur ringartig geschlossene Bauteile im Bereich der Ankopplung der Doppelkupplung an die Antriebswelle zum Einsatz kommen können, was die fliehkraft- und steifigkeitsinduzierten Probleme deutlich mindert.

## Patentansprüche

1. Doppelkupplung, umfassend zwei Kupplungsbereiche (12, 14) jeweils mit einer vermittels einer Kraftbeaufschlagungsanordnung (20, 22) auf eine Widerlageranordnung (26) zu beaufschlagbaren Anpressplatte (16, 18), wobei die Widerlageranordnung (26) über eine Verbindungsplattenanordnung (44) an ein Antriebsorgan (54) anzukoppeln ist, ferner umfassend einen mit der Widerlageranordnung (26) zur gemeinsamen Drehung gekoppelten Anlasserzahnkranz (36), wobei der Anlasserzahnkranz (36) einen ersten Kopplungsbereich (40) zur Verbindung mit der Widerlageranordnung (26) aufweist und einen zweiten Kopplungsbereich (42) zur Verbindung mit der Verbindungsplattenanordnung (44) aufweist.

2. Doppelkupplung nach Anspruch 1,
**dadurch gekennzeichnet, dass** der Anlasserzahnkranz die Widerlageranordnung (26) mit seinem ersten Kopplungsbereich (40) umgebend angeordnet ist und mit dieser durch Presssitz oder/und Verschweißung verbunden ist.

3. Doppelkupplung nach Anspruch 1 oder 2,
**dadurch gekennzeichnet, dass** der Anlasserzahnkranz (36) axial versetzt zu seiner Verzahnung (38) den zweiten Kopplungsbereich (42) aufweist.

4. Doppelkupplung, umfassend zwei Kupplungsbereiche (12a, 14a; 12b, 14b) jeweils mit einer vermittels einer Kraftbeaufschlagungsanordnung (20a, 22a; 20b, 22b) auf eine Widerlageranordnung (26a; 26b) zu beaufschlagbaren Anpressplatte (16a, 18a; 16b, 18b), wobei die Widerlageranordnung (26a; 26b) über eine Verbindungsplattenanordnung (44a; 44b) an ein Antriebsorgan (54a; 54b) anzukoppeln ist, ferner umfassend einen mit der Widerlageranordnung (26a; 26b) zur gemeinsamen Drehung gekoppelten Anlasserzahnkranz (36a; 36b), wobei die Verbindungsplattenanordnung (44a; 44b) mit der Widerlageranordnung (26a; 26b) fest verbunden ist und der Anlasserzahnkranz (36a; 36b) an der Verbindungsplattenanordnung (44a; 44b) getragen ist.

5. Doppelkupplung nach Anspruch 4,
**dadurch gekennzeichnet, dass** die Widerlageranordnung (44b) mit der Verbindungsplattenanordnung (26b) durch Verschraubung fest verbunden ist.

6. Doppelkupplung nach Anspruch 4,
dass die Verbindungsplattenanordnung (44a) mit der Widerlageranordnung (26a) durch Presssitz oder/und Verschweißung fest verbunden ist.

7. Doppelkupplung nach einem der Ansprüche 4 bis 6,
**dadurch gekennzeichnet, dass** die Verbindungsplattenanordnung (44a; 44b) einen Verbindungsring (56a; 56b) aufweist, welcher mit der Widerlageranordnung (26a; 26b) fest verbunden ist, und dass der Anlasserzahnkranz (36a; 36b) an dem Verbindungsring (56a; 56b) getragen ist.

8. Doppelkupplung nach Anspruch 7,
**dadurch gekennzeichnet, dass** der Verbindungsring (56b) die Widerlageranordnung (16b) umgebend angeordnet ist und mit dieser durch Presssitz verbunden ist.

9. Doppelkupplung nach Anspruch 7 oder 8,
**dadurch gekennzeichnet, dass** der Anlasserzahnkranz (36b) den Verbindungsring (56b) umgebend angeordnet ist und mit diesem durch Presssitz verbunden ist.

10. Doppelkupplung, umfassend zwei Kupplungsbereiche (12c, 14c) jeweils mit einer vermittels einer Kraftbeaufschlagungsanordnung (20c, 22c) auf eine Widerlageranordnung (26c) zu beaufschlagbaren Anpressplatte (16c, 18c), wobei die Widerlageranordnung (26c) über eine Verbindungsplattenanordnung (44c) an ein Antriebsorgan (54c) anzukoppeln ist, ferner umfassend einen mit der Widerlageranordnung (26c) zur gemeinsamen Drehung gekoppelten Anlasserzahnkranz (36c), wobei an der Widerlageranordnung (26c) eine Axialanschlagformation (62c) zur Axiallagevorgabe für den Anlasserzahnkranz (36c) vorgesehen ist.

11. Doppelkupplung nach Anspruch 10,
**dadurch gekennzeichnet, dass** die Widerlageranordnung (26c) eine Mehrzahl von Kopplungsvorsprüngen (60c) zur Verbindung mit der Verbindungsplattenanordnung (44c) aufweist und dass die Axialanschlagformation (62c) im Bereich von Kopplungsvorsprüngen (60c) vorgesehen ist.

12. Doppelkupplung nach Anspruch 10 oder 11,
**dadurch gekennzeichnet, dass** die Axialanschlagformation (62c) wenigstens einen in die Widerlageranordnung (26c) eingesetzten Anschlagstift (62c) umfasst.
